(19) Europäisches Patentamt
European Patent Office
Office européen des brevets

(11) **EP 4 760 717 A1**

(12) **EUROPEAN PATENT APPLICATION**
published in accordance with Art. 153(4) EPC

(43) Date of publication:
**17.06.2026 Bulletin 2026/25**

(21) Application number: **24866896.4**

(22) Date of filing: **27.05.2024**

(51) International Patent Classification (IPC):
*G10L 21/0208* (2013.01)     *G10L 25/48* (2013.01)
*G06F 17/16* (2006.01)     *G06F 17/14* (2006.01)

(52) Cooperative Patent Classification (CPC):
**G06F 17/16; G10L 21/0208; G10L 25/48;**
G06F 17/142; G10L 2021/02082

(86) International application number:
**PCT/CN2024/095414**

(87) International publication number:
**WO 2025/060473 (27.03.2025 Gazette 2025/13)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **18.09.2023 CN 202311201744**

(71) Applicant: **Tencent Technology (Shenzhen)
Company Limited
Shenzhen, Guangdong 518057 (CN)**

(72) Inventor: **ZHOU, Wei
Shenzhen, Guangdong 518057 (CN)**

(74) Representative: **Gunzelmann, Rainer
Wuesthoff & Wuesthoff
Patentanwälte und Rechtsanwalt PartG mbB
Schweigerstraße 2
81541 München (DE)**

(54) **AUDIO DATA FILTERING METHOD AND APPARATUS, DEVICE, AND STORAGE MEDIUM**

(57)     An audio data filtering method and apparatus, a device, and a storage medium, relating to the technical field of audio. The method comprises: acquiring audio data and a first complex number array (201); converting the audio data into a second complex number array (202); extracting a real part and an imaginary part of each complex number in the first complex number array to obtain a first complex number vector, and extracting a real part and an imaginary part of each complex number in the second complex number array to obtain a second complex number vector (203); successively reading elements in the first complex number vector to obtain a plurality of first operation vectors, and successively reading elements in the second complex number vector to obtain a plurality of second operation vectors (204); performing a vector operation on the read first operation vectors and the read second operation vectors to obtain a plurality of result vectors (205); and determining filtered audio data on the basis of the plurality of result vectors (206). The method improves reading efficiency and operation efficiency, thereby improving filtering efficiency.

FIG. 2

## Description

This application claims priority to Chinese Patent Application No. 202311201744.5, filed on September 18, 2023 and entitled "AUDIO DATA FILTERING METHOD AND APPARATUS, DEVICE, AND STORAGE MEDIUM".

FIELD OF THE TECHNOLOGY

This application relates to the field of audio technologies, and in particular, to an audio data filtering method and apparatus, a device, and a storage medium.

BACKGROUND OF THE DISCLOSURE

In game scenes, players generally communicate with each other through voice. In order to ensure the sound effects, audio data of the players will be filtered.

SUMMARY

Embodiments of this application provide an audio data filtering method and apparatus, a device, and a storage medium, which can improve filtering efficiency of audio data. The technical solutions are as follows:

According to an aspect, an audio data filtering method is provided, applicable to a computer device, the method including:

acquiring audio data and a first complex number array, the first complex number array indicating filter parameters of a filter;

converting the audio data into a second complex number array;

extracting a real part and an imaginary part of each complex number in the first complex number array to obtain a first complex number vector, and extracting a real part and an imaginary part of each complex number in the second complex number array to obtain a second complex number vector;

successively reading elements in the first complex number vector to obtain a plurality of first operation vectors, and successively reading elements in the second complex number vector to obtain a plurality of second operation vectors, the first operation vector and the second operation vector each including real parts and imaginary parts of a plurality of complex numbers, and a first quantity of complex numbers indicated by the first operation vector being the same as a second quantity of complex numbers indicated by the second operation vector;

performing a vector operation on read first operation vectors and the second operation vectors to obtain a plurality of result vectors; and

determining filtered audio data based on the plurality of result vectors.

According to another aspect, an audio data filtering apparatus is provided, the apparatus including:

an acquisition module, configured to acquire audio data and a first complex number array, the first complex number array indicating filter parameters of a filter;

a conversion module, configured to convert the audio data into a second complex number array;

an extraction module, configured to extract a real part and an imaginary part of each complex number in the first complex number array to obtain a first complex number vector, and extract a real part and an imaginary part of each complex number in the second complex number array to obtain a second complex number vector;

a reading module, configured to successively read elements in the first complex number vector to obtain a plurality of first operation vectors, and successively read elements in the second complex number vector to obtain a plurality of second operation vectors, the first operation vector and the second operation vector each including real parts and imaginary parts of a plurality of complex numbers, and a first quantity of complex numbers indicated by the first operation vector being the same as a second quantity of complex numbers indicated by the second operation vector;

an operation module, configured to perform a vector operation on the first operation vectors and the second operation vectors to obtain a plurality of result vectors; and

a determining module, configured to determine filtered audio data based on the plurality of result vectors.

According to another aspect, a computer device is provided, the computer device including a processor and a memory, the memory being configured to store at least one program, the at least one program being loaded and executed by the processor to implement the audio data filtering method in the embodiments of this application.

According to another aspect, a computer-readable storage medium is provided, the computer-readable storage medium storing at least one program, the at least one program being loaded and executed by a processor to implement the audio data filtering method in the embodiments of this application.

According to another aspect, a computer program product is provided, the computer program product including at least one program, the at least one program being stored in a computer-readable storage medium, a processor of a computer device reading the at least one program from the computer-readable storage medium, and the processor executing the at least one program to cause the computer device to perform the foregoing audio data filtering method.

BRIEF DESCRIPTION OF THE DRAWINGS

To describe the technical solutions in the embodiments of this application more clearly, the following briefly introduces the accompanying drawings required for describing the embodiments. Apparently, the accompanying drawings in the following description show merely some embodiments of this application, and a person of ordinary skill in the art may still derive other accompanying drawings from these accompanying drawings without creative efforts.

FIG. 1 is a schematic diagram of an implementation environment according to an embodiment of this application.

FIG. 2 is a flowchart of an audio data filtering method according to an embodiment of this application.

FIG. 3 is a flowchart of another audio data filtering method according to an embodiment of this application.

FIG. 4 is a schematic diagram of a parallel operation according to an embodiment of this application.

FIG. 5 is a schematic operation diagram of complex number arrays according to an embodiment of this application.

FIG. 6 is a flowchart of a vector operation according to an embodiment of this application.

FIG. 7 is a schematic diagram of a virtual scene according to an embodiment of this application.

FIG. 8 is a schematic diagram of another virtual scene according to an embodiment of this application.

FIG. 9 is a block diagram of an audio data filtering apparatus according to an embodiment of this application.

FIG. 10 is a block diagram of a terminal according to an embodiment of this application.

FIG. 11 is a block diagram of a server according to an embodiment of this application.

DESCRIPTION OF EMBODIMENTS

To make the objectives, technical solutions, and advantages of this application clearer, the following further describes implementations of this application in detail with reference to the accompanying drawings.

The terms "first", "second", and the like in this application are configured for distinguishing between same items or similar items of which effects and functions are basically the same. The "first", "second", and "nth" do not have a dependency relationship in logic or time sequence, and a quantity and an execution order thereof are not limited.

In this application, the term "at least one" means one or more and the term "a plurality of" means two or more.

Information (including but not limited to user device information, user personal information, etc.), data (including but not limited to data used for analysis, stored data, displayed data, etc.) and signals involved in this application are authorized by the user or fully authorized by all parties, and the collection, use and processing of relevant data need to comply with relevant laws, regulations and standards of relevant countries and regions. For example, all audio data involved in this application is acquired under full authorization.

Technical terms involved in this application are described below.

Virtual scene: It is a virtual scene displayed (or provided) when an application is run on a terminal. The virtual scene may be a simulated environment of a real world, or may be a semi-simulated semi-fictional virtual environment, or may be an entirely fictional virtual environment. The virtual scene may be any one of a two-dimensional virtual scene, a 2.5-dimensional virtual scene, or a three-dimensional virtual scene, and the dimension of the virtual scene is not limited in the embodiments of this application. For example, the virtual scene may include the sky, the land, the ocean, or the like. The land may include environmental elements such as the desert and a city. A terminal user may control the virtual object to move in the virtual scene.

The following describes an implementation environment related to this application.

The audio data filtering method provided in the embodiments of this application is performed by a computer device. The computer device is at least one of a terminal or a server. The following describes a schematic diagram of an implementation environment of the audio data filtering method provided in the embodiments of this application.

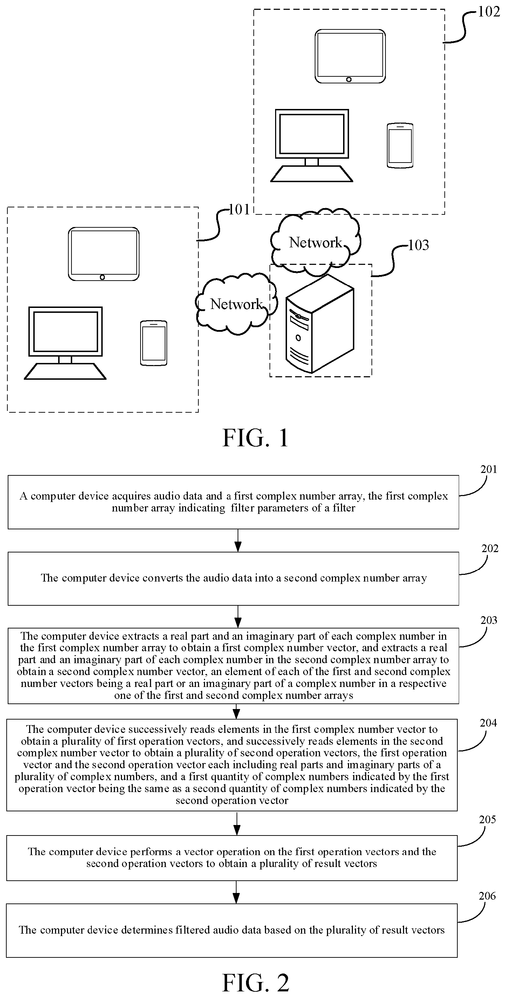

FIG. 1 is a schematic diagram of an implementation environment of an audio data filtering method according to an embodiment of this application. The implementation environment includes: a terminal 101, a terminal 102, and a server 103. The terminal 101 and the terminal 102 can be directly or indirectly connected to the server 103 in a wired or wireless communication manner. This is not limited in this application. In some embodiments, the terminal 101 and the terminal 102 are two terminals for a call. The terminal 101 acquires audio data of a call object and transmits the audio data to the server 103. The server 103 filters the audio data and transmits the filtered audio data to the terminal 102 for playback. In some embodiments, the call may be a call in an instant messaging application or a call in a game application. This is not specifically limited herein. In some embodiments, the terminal 101 acquires audio data, filters the audio data, and then outputs the filtered audio data, or transmits the filtered audio data to the terminal 102.

In some embodiments, the terminal 101 and the terminal 102 may be smartphones, tablet computers, notebook computers, desktop computers, smart voice interaction devices, smart home appliances, in-vehicle terminals, aircrafts, virtual reality (VR) apparatuses, augmented reality (AR) apparatuses, or the like, but are not limited thereto. In some embodiments, the server 103 may be an independent server, or may be a server cluster or a distributed system formed by a plurality of servers, or may be a cloud server that provides a basic cloud computing service such as a cloud service, a cloud database, cloud computing, a cloud function, cloud storage, a network service, cloud communication, a middleware service, a domain name service, a security service, a content delivery network (CDN), big data, and an artificial intelligence platform. In some embodiments, the server 103 takes on primary computing work, and the terminal 101 and the terminal 102 take on secondary computing work; alternatively, the server 103 takes on secondary computing services, and the terminal 101 and the terminal 102 take on primary computing work; alternatively, collaborative computing is performed by using a distributed computing architecture among the server 103, the terminal 101, and the terminal 102. It is noted that the technical features in the following embodiments in this application can implements in their respective embodiments, or implemented in combination with features in any other embodiments. That is, the embodiments in the application can be implemented alone, or in combination with any one or more of the other embodiments in the application, to achieve different technical solutions and technical effects, as long as no conflict is caused by the above combination.

FIG. 2 is a flowchart of an audio data filtering method according to an embodiment of this application. The method is performed by a computer device. It is noted that the embodiments described with reference to the drawings in this application are merely exemplary, and it is not limited in this application that the respective method must include all the steps as described and illustrated; rather, the method in the application may include some or all of the steps as listed, and the steps may be combined with each other arbitrarily to form various embodiments of the application. Referring to FIG. 2, the method includes the following operations:

**201: A computer device acquires audio data and a first complex number array, the first complex number array indicating filter parameters of a filter.**

In this embodiment of this application, the filter is configured to filter the audio data. Filtering the audio data is configured for improving a signal-to-noise ratio of a high-frequency signal in the audio data to make the signal clearer, or for canceling interference noise in the audio data, or for removing reverberation effects in the audio data, or for canceling echoes in the audio data, or for achieving at least two of the above. In this embodiment of this application, an example in which the filter is configured to cancel echoes in the audio data is used for description. In some embodiments, the filter is an adaptive filter.

In this embodiment of this application, the filter filters the audio data based on its filter parameter. In some embodiments, the filter parameters include a plurality of weight coefficients in the filter. The filter parameters are the first complex number array. The first complex number array includes a plurality of complex numbers, and the plurality of complex numbers are arranged in sequence in the first complex number array. The plurality of complex numbers are the plurality of weight coefficients in the filter, and each complex number includes a real part and an imaginary part.

For example, the first complex number array is "a+bi, c+di, ...", where a+bi is a complex number, a is a real part of the complex number, and b is an imaginary part of the complex number. c+di is a complex number, c is a real part of the complex number, and d is an imaginary part of the complex number. i is an imaginary number unit.

**202: The computer device converts the audio data into a second complex number array.**

In this embodiment of this application, the computer device converts the audio data to obtain audio data in the form of a complex number array, that is, a second complex number array, the second complex number array being configured for representing the audio data. The second complex number array includes a plurality of complex numbers, and the plurality of complex numbers are arranged in sequence in the second complex number array. Each complex number includes a real part and an imaginary part.

In this embodiment of this application, the audio data is presented as a time domain signal, that is, an audio signal includes amplitude values and phases of a plurality of sampling points. A real part of a complex number in the second complex number array is an amplitude value of a sampling point in the time domain signal, and an imaginary part is a phase of the sampling point. In some embodiments, the computer device performs a Fourier transform on the audio data to obtain the second complex number array.

**203: The computer device extracts a real**

part and an imaginary part of each complex number in the first complex number array to obtain a first complex number vector, and extracts a real part and an imaginary part of each complex number in the second complex number array to obtain a second complex number vector, an element of each of the first and second complex number vectors being a real part or an imaginary part of a complex number in a respective one of the first and second complex number arrays.

In this embodiment of this application, real parts and imaginary parts of a plurality of complex numbers are arranged in a complex number vector in the same order as in the complex number array. A real part and an imaginary part of a complex number are two adjacent elements in the complex number vector.

An element of a complex number vector is a real part or an imaginary part of a complex number, which means that each element in the first complex number vector belongs to a complex number in the first complex number array and is a real part or an imaginary part of the complex number, and each element in the second complex number vector belongs to a complex number in the second complex number array and is a real part or an imaginary part of the complex number.

In operation 203, the computer device extracts the real part and the imaginary part of each complex number in the first complex number array as elements, and constructs a first complex number vector with the plurality of extracted elements in an extraction order, so that an element of the first complex number vector is a real part or an imaginary part of a complex number in the first complex number array. The computer device extracts the real part and the imaginary part of each complex number in the second complex number array as elements, and constructs a second complex number vector with the plurality of extracted elements in an extraction order, so that an element of the second complex number vector is a real part or an imaginary part of a complex number in the second complex number array.

204: The computer device successively reads elements in the first complex number vector to obtain a plurality of first operation vectors, and successively reads elements in the second complex number vector to obtain a plurality of second operation vectors, the first operation vector and the second operation vector each including real parts and imaginary parts of a plurality of complex numbers, and a first quantity of complex numbers indicated by the first operation vector being the same as a second quantity of complex numbers indicated by the second operation vector.

In this embodiment of this application, elements in a complex number vector are arranged in an order. For example, a real part of a complex number is arranged before an imaginary part of the complex number. Successively reading the elements in the complex number vector means performing reading in the order of the elements in the complex number vector each time, to ensure that an order of elements in an operation vector remains unchanged. The computer device reads the first complex number vector and the second complex number vector for a plurality of times, to obtain a plurality of first operation vectors and a plurality of second operation vectors respectively.

The computer device reads a plurality of elements in the first complex number vector each time to obtain a first operation vector, and reads a plurality of elements in the second complex number vector each time to obtain a second operation vector. Each of the first operation vector and the second operation vector includes real parts and imaginary parts of a plurality of complex numbers, that is, not only a real part and an imaginary part of one complex number can be completely read at a time, but also real parts and imaginary parts of a plurality of complex numbers can be read at a time.

In this embodiment of this application, the preset step size is for indicating a quantity of a plurality of elements read each time. Operation 204 includes that: the computer device reads a plurality of elements in the first complex number vector according to a preset step size each time, to obtain one first operation vector; and reads a plurality of elements in the second complex number vector according to the preset step size each time, to obtain one second operation vector. Therefore, after reading the elements in the first complex number vector for a plurality of times, the computer device can obtain a plurality of first operation vectors; and after reading the elements in the second complex number vector for a plurality of times, the computer device can obtain a plurality of second operation vectors. In some embodiments, the preset step size is an even number, so that a plurality of complete complex numbers can be read each time. A complete complex number refers to a complex number including a real part and an imaginary part, avoiding a situation in which the real part and the imaginary part of the same complex number are separated.

When complex number operations are performed on the first complex number array and the second complex number array, an operation is performed on every two complex numbers at corresponding positions in the two complex number arrays. For example, an operation is performed on a first complex number in the first complex number array and a first complex number in the second complex number array, an operation is performed on a second complex number in the first complex number array and a second complex number in the second complex number array, and so on.

Therefore, the computer device extracts elements from the first complex number vector and the second complex number vector respectively according to the same preset step size, that is, the quantity of elements extracted from the first complex number vector is the same as the quantity of elements extracted from the second complex number vector each time, so that the quantities of a plurality of complex numbers indicated by the first operation vector and the second operation vector are the same, thereby facilitating one-to-one correspondence operations on complex numbers at corresponding positions in the two operation vectors.

Because the plurality of first operation vectors and the plurality of second operation vectors are obtained from the first complex number vector and the second complex number vector in same orders respectively, among the plurality of first operation vectors and the plurality of second operation vectors, a first operation vector and a second operation vector in the same order are two corresponding operation vectors.

**205: The computer device performs a vector operation on the first operation vectors and the second operation vectors to obtain a plurality of result vectors.**

In this embodiment of this application, the computer device performs a vector operation on a first operation vector and a second operation vector that are read at each time, to obtain a respective result vector for each read. Therefore, the computer device performs a vector operation on first operation vectors and second operation vectors that are read at a plurality of times respectively, to obtain a plurality of respective result vectors.

In this embodiment of this application, in a case that the two complex number vectors do not include any unread elements, the computer device performs operation 205, that is, performs a vector operation on the first operation vectors and the second operation vectors that are obtained by reading for plurality of times. In addition, grouping is performed in the operation process. A first operation vector and a second operation vector corresponding to each other are grouped into one group, so that a vector operation is performed on each group to obtain a result vector for each group. Alternatively, each time the computer device reads elements and obtains a first operation vector and a second operation vector, the computer device performs operation 205, that is, performs a vector operation immediately after a first operation vector and a second operation vector are read each time. In this embodiment of this application, a description is provided by using an example of performing a vector operation immediately after a first operation vector and a second operation vector are read each time.

In this embodiment of this application, because the first operation vector is obtained based on extracting elements from the first complex number vector, and the first complex number vector is obtained from the filter parameter, the plurality of elements in the first operation vector represent a part of filtered data. Because the second operation vector is obtained based on extracting elements from the second complex number vector, and the second complex number vector is obtained from the second complex number array representing the audio data, the plurality of elements in the second operation vector represent a part of the audio data. Therefore, performing an operation on the first operation vector and the second operation vector represents filtering the audio data based on the filtered data. Correspondingly, the plurality of obtained result vectors represent filtered audio data.

When the computer device performs a vector operation on the first operation vector and the second operation vector, the operation type (or a type of operation) used may include at least one of addition, subtraction, multiplication, or division. The operation type may be determined by the computer device according to a filtering algorithm. This is not limited in this embodiment of this application.

**206: The computer device determines filtered audio data based on the plurality of result vectors.**

In this embodiment of this application, a result complex number array may be determined based on the plurality of result vectors. The result complex number array is configured for representing the filtered audio data. The computer device performs a reverse conversion on the result complex number array to obtain the filtered audio data. In addition, it is easily understood that audio can be generated from the filtered audio data by means known to those in the art.

In some embodiments, the computer device implements the foregoing operations through the filter. That is, the computer device inputs the audio data into the filter, and the filter filters the audio data based on the filter parameter, and then outputs the filtered audio data.

In the related art, the process of filtering audio data is mainly a process of operations on a complex number array, the complex number array including a plurality of complex numbers. During the operation processing on the complex number array, complex numbers in the complex number array are read. During reading of any complex number, a real part of the complex number is read first, and then an imaginary part of the complex number is read, so that an operation is performed based on the real part and the imaginary part of the complex number. Reading real parts and imaginary parts in the complex numbers one by one requires a plurality of reading operations, which reduces filtering efficiency of the audio data.

This embodiment of this application provides an audio data filtering method. In the method, audio data is converted into a complex number vector, and filter parameters are represented in the form of a complex number array. In this way, elements are read from the complex number vector for operations, and a real part and an imaginary part of a complex number can be read simultaneously, so that it is unnecessary to read the real part and the imaginary part of the complex number at two times, thereby improving reading efficiency. In addition, a plurality of complex numbers can be read at a time, further improving the reading efficiency. Based on the first operation vector and the second operation vector corresponding to a plurality of complex numbers for vector operations, operations can be performed on the plurality of complex numbers at a time, thereby improving operation efficiency. In the method, by converting a complex number array into a vector for processing, the reading efficiency and the operation efficiency are improved, thereby improving the filtering efficiency of the audio data.

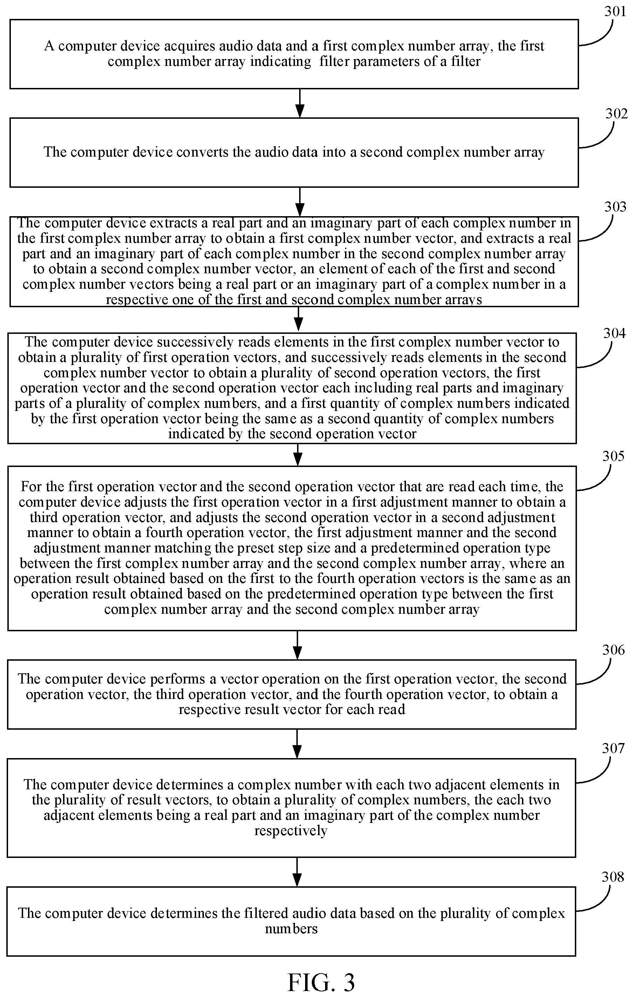

The audio data filtering method is briefly described above by using the embodiment of FIG. 2. The following further describes the audio data filtering method by using the embodiment of FIG. 3. FIG. 3 shows an audio data filtering method according to an embodiment of this application. The method is performed by a computer device. The method includes the following operations:

**301: A computer device acquires audio data and a first complex number array, the first complex number array indicating filter parameters of a filter.**

In this embodiment of this application, Operation 301 is similar to operation 201, and details are not described herein again.

**302: The computer device converts the audio data into a second complex number array.**

In this embodiment of this application, two complex numbers at corresponding positions in the first complex number array and the second complex number array are configured for a complex number operation. For example, a complex number operation is performed on a first complex number in the first complex number array and a first complex number in the second complex number array, that is, operations are performed on a plurality of complex numbers in the two complex number arrays in a one-to-one correspondence.

**303: The computer device extracts a real part and an imaginary part of each complex number in the first complex number array to obtain a first complex number vector, and extracts a real part and an imaginary part of each complex number in the second complex number array to obtain a second complex number vector, an element of each of the first and second complex number vectors being a real part or an imaginary part of a complex number in a respective one of the first and second complex number arrays.**

In this embodiment of this application, an order of real parts and imaginary parts of a plurality of complex numbers in a complex number vector matches an order thereof in a complex number array. In a complex number vector, a real part of a complex number is sorted before an imaginary part of the complex number, and a real part and an imaginary part of a complex number are two adjacent elements.

A complex number array stores complex numbers in the structure of a C++ (a computer programming language) complex, is a complex provided in the C++ standard library for representing complex numbers, and provides real part and imaginary part data storage and common complex number operation methods. For example, a storage form of a complex number array is "a+bi, c+di, ...". In another example, a storage form of a complex number array is "r:a, i:b, r:a, i:b, ...", where r is configured for identifying a real part of a complex number, and i is configured for identifying an imaginary part of the complex number.

In this embodiment of this application, the conversion of complex numbers into vectors for operations is implemented through assembly language. The assembly language is a low-level computer programming language, configured for directly controlling computer hardware to implement vector operations.

In this embodiment of this application, in the filtering algorithm implemented by the C++ class structure, assembly language is used to simulate bitwise operations of C++ complex numbers from the perspective of an internal memory model and a mathematical operation, and promotes linear operations to parallel operations of vectors, thereby greatly improving the operation efficiency in the filtering process. The internal memory model is an abstract model of program accessing memory, and is configured for describing how a program accesses an internal memory to read data. The internal memory is configured to store various types of data, such as complex number vectors and operation vectors.

**304: The computer device successively reads elements in the first complex number vector to obtain a plurality of first operation vectors, and successively reads elements in the second complex number vector to obtain a plurality of second operation vectors, the first operation vector and the second operation vector each including real parts and imaginary parts of a plurality of complex numbers, and a first quantity of complex numbers indicated by the first operation vector being the same as a second quantity of complex numbers indicated by the second operation vector.**

In some embodiments, the preset step size is for indicating the quantity of a plurality of elements read each time. The computer device reads a plurality of elements according to the preset step size, that is, a plurality of elements with a preset quantity is acquired from the complex number vector each time, the preset quantity being equal to the preset step size, and then the plurality of elements read each time are combined into an operation vector. An order of the plurality of elements in the operation vector is the same as an order thereof in the complex number vector.

In this embodiment of this application, when the computer device successively reads the elements, the elements are read from front to rear in the order of the plurality of elements in the complex number vector.

For example, in an $i^{th}$ reading process, a plurality of elements in the first complex number vector are read to obtain a first operation vector for an $i^{th}$ operation; and in an $(i+1)^{th}$ reading process, a plurality of elements are read from remaining elements of the first complex number vector to obtain a first operation vector for an $(i+1)^{th}$ operation. The plurality of elements in the first operation vector at the $i^{th}$ time are arranged before the plurality of elements in the first operation vector at the $(i+1)^{th}$ time in the first complex number vector. The process for acquiring the second operation vector is similar to this process, and details are not described herein again. i is an integer greater than or equal to 1.

In some embodiments, after any element in a complex number vector is read, the element are removed and no longer exists in the complex number vector. In this way, during element reading each time, merely the first several elements in the complex number vector corresponding to the preset step size need to be read, thereby improving reading efficiency.

**305: For the first operation vector and the second operation vector that are read at each time, the computer device adjusts the first operation vector in a first adjustment manner to obtain a third operation vector, and adjusts the second operation vector in a second adjustment manner to obtain a fourth operation vector, the first adjustment manner and the second adjustment manner matching the preset step size and a predetermined operation type between the first complex number array and the second complex number array, where an operation result obtained based on the first to fourth operation vectors is the same as an operation result obtained based on the predetermined operation type between the first complex number array and the second complex number array.**

In this embodiment of this application, the two operation vectors (that is, the first operation vector and the second operation vector) are adjusted based on the first adjustment manner and a second adjustment manner that match the preset step size and the operation type. In this way, vector operations are performed based on the adjusted operation vectors, and concurrent operations on a plurality of complex numbers can be achieved through the vector operations, thereby improving operation efficiency; and the obtained operation result is the same as the operation result obtained based on the operation type between the first complex number array and the second complex number array, which ensures the accuracy of the operations, thereby improving the filtering efficiency and ensuring the accuracy of the filtering.

The computer does not need to actually perform the operation of "performing an operation on the first complex number array and the second complex number array based on the predetermined operation type to obtain an operation result", but only needs to determine the correct first adjustment manner and second adjustment manner, to ensure that the obtained operation result is the same as "the operation result obtained by performing an operation on the first complex number array and the second complex number array based on the predetermined operation type".

The operation type (type of operation, or operation) includes at least one of addition, subtraction, multiplication, or division.

In some embodiments, the computer device may adjust the first operation vector in a plurality of adjustment manners to obtain a plurality of third operation vectors, and may adjust the second operation vector in a plurality of adjustment manners to obtain a plurality of fourth operation vectors; or may further adjust the third operation vector and further adjust the fourth operation vector, to improve the diversity and flexibility of the adjustment, thereby facilitating vector operations.

In this embodiment of this application, an adjustment manner includes at least one of exchanging elements indicating a real part and an imaginary part in an operation vector, modifying a value of an element in the operation vector, or modifying a sign of the element in the operation vector.

Exchanging elements indicating a real part and an imaginary part may be exchanging a real part and an imaginary part of the same complex number, or exchanging a real part and an imaginary part of different complex numbers. Modifying the value of the element in the operation vector may be performing modification based on a value of an element in the operation vector, or based on a value outside the operation vector.

In this embodiment of this application, by adjusting the operation vectors in the plurality of adjustment manners above, the plurality of operation vectors can be adjusted to a form in which operations can be unifiedly performed on a plurality of pairs of complex numbers, and then based on the adjusted operation vectors, unified operations can be performed on the plurality of pairs of complex numbers, thereby improving the operation efficiency.

In some embodiments, the computer device establishes a correspondence in advance, so that the computer device determines adjustment manners based on the preset step size and the operation type. The process in which the computer device establishes the correspondence includes the following operations: determining, by the computer device, a plurality of adjustment manner pairs based on a plurality of condition pairs, each condition pair including a preset step size and an operation type, each adjustment manner pair including two adjustment manners, and the two adjustment manners being respectively configured for adjusting two operation vectors; and establishing a correspondence based on the plurality of condition pairs and the plurality of adjustment manner pairs, the correspondence including the plurality of condition pairs and the adjustment manner pairs respectively corresponding to the plurality of condition pairs, and the correspondence being configured for determining adjustment manners.

In this embodiment of this application, the preset step size in the condition pair may be four, six, eight, or the like, and the operation type may be addition, subtraction, multiplication, division, or the like. An adjustment manner includes at least one of exchanging elements indicating a real part and an imaginary part in an operation vector, modifying a value of an element in the operation vector, or modifying a sign of the element in the operation vector. The sign may be + or -, which indicate the element is a positive number or a negative number respectively. For example, when the condition pair includes a preset step size of four and the operation type is multiplication, an adjustment manner pair determined based on the correspondence includes an adjustment manner of exchanging elements indicating a real part and an imaginary part in an operation vector, and an adjustment manner of modifying a sign and a value of an element indicating a real part in the operation vector.

In this embodiment of this application, because the correspondence is established in advance, during adjustment on an operation vector, an adjustment manner can be quickly determined, and the adjustment manner is configured for performing a vector operation, thereby improving the efficiency of the vector operation.

In some embodiments, for any condition pair, the computer device determines an operation result of each two complex numbers based on the quantity of complex numbers indicated by the preset step size and the operation type, determines an intermediate result configured for obtaining real parts and imaginary parts in the operation result, and then determines an intermediate vector configured for obtaining the intermediate result. The manner in which the operation vector is converted into the intermediate vector is used as the adjustment manner. Each adjustment manner may include a plurality of sub-adjustment manners, so that the same operation vector is adjusted in the plurality of sub-adjustment manners respectively to obtain a plurality of adjusted operation vectors.

In some embodiments, after reading the elements to obtain the first operation vector and the second operation vector, the computer device adjusts the first operation vector and the second operation vector to obtain the third operation vector and the fourth operation vector. In some other embodiments, the process in which the computer device acquires the third operation vector and the fourth operation vector is performed in the process of reading the elements. Accordingly, the computer device adjusts the elements in the adjustment manners corresponding to the third operation vector and the fourth operation vector in the process of reading the elements, that is, the reading operation and the adjustment operation are performed concurrently, to improve the efficiency of obtaining the adjusted operation vectors.

In some embodiments, the computer device uses the vector parallel computing technology of a multi function control unit (MFCU) of a chip to increase the operation speed. The MFCU is a common computing unit in chips, and has a variety of different computing functions. The MFCU is usually formed by a plurality of computing units and can perform a plurality of different operations simultaneously, including addition, subtraction, multiplication, division, logical operations, vector operations, and the like. The vector parallel computing technology is a parallel computing technology that uses hardware devices such as a vector processor or a graphics processing unit (GPU) to perform operations on a plurality of vectors simultaneously, to improve operation efficiency and performance.

**306: The computer device performs a vector operation on the first operation vector, the second operation vector, the third operation vector, and the fourth operation vector, to obtain a respective result vector for each read.**

In some embodiments, the foregoing process in which the computer device performs a vector operation on the first operation vector, the second operation vector, the third operation vector, and the fourth operation vector, to obtain a respective result vector for each read includes the following operations: performing, by the computer device, a plurality of vector operations on the first operation vector, the second operation vector, the third operation vector, and the fourth operation vector, to obtain a plurality of intermediate result vectors, each element in the intermediate result vector being configured for determining a real part or an imaginary part of a complex number, and each vector operation corresponding to at least two of the first operation vector, the second operation vector, the third operation vector, or the fourth operation vector; and combining, by the computer device, the plurality of intermediate result vectors to obtain the result vector at the any time, a real part or an imaginary part indicated by the result vector being obtained by combining a plurality of elements at same positions in the plurality of intermediate result vectors.

The plurality of vector operations are at least two vector operations. For example, the computer device performs a vector operation on the first operation vector and the third operation vector to obtain an intermediate result vector; and the computer device performs a vector operation on the second operation vector and the fourth operation vector to obtain an intermediate result vector. In another example, the computer device performs a vector operation on the first operation vector, the second operation vector, and the third operation vector to obtain an intermediate result vector; and the computer device performs a vector operation on the first operation vector and the fourth operation vector to obtain an intermediate result vector.

In this embodiment of this application, the plurality of elements in the result vector are real parts and imaginary parts of a plurality of complex numbers, and one element is a real part or an imaginary part of a complex number. Combining the plurality of intermediate result vectors includes performing one of addition, subtraction, multiplication, and division on the plurality of intermediate result vectors to obtain a respective result vector. For example, if combining the plurality of intermediate result vectors is performed by accumulating the plurality of intermediate result vectors, then each element in the result vector is a sum of a plurality of elements in the plurality of intermediate result vectors that are located same positions as the element.

In this embodiment of this application, by performing unified operations on a plurality of operation vectors and concurrent operations on a plurality of elements in the operation vectors, intermediate results of real parts and imaginary parts of a plurality of complex numbers can be obtained at a time; and then concurrent operations are performed on a plurality of elements in the intermediate vectors, so that real parts and imaginary parts of a plurality of complex numbers can be obtained at a time. In this way, by utilizing the principle of concurrent computation of a plurality of elements of vectors, a plurality of complex numbers can be processed concurrently, thereby improving the efficiency of complex number operations.

In this embodiment of this application, through the foregoing operations 305 and 306, the process of performing a vector operation on the read first operation vectors and the read second operation vectors to obtain a plurality of result vectors is implemented. In this embodiment, by adjusting the operation vectors, the plurality of operation vectors can be adjusted to a form in which operations can be unifiedly performed on a plurality of pairs of complex numbers, and then based on the adjusted operation vectors, unified operations can be performed on the plurality of pairs of complex numbers, thereby improving the operation efficiency. In addition, because the operation efficiency is improved, the filtering time is shortened. Accordingly, the filtering speed is improved, thereby improving the filtering efficiency.

The foregoing operations 305 and 306 are merely an alternative implementation of performing a vector operation on the read first operation vectors and the read second operation vectors to obtain a plurality of result vectors, and the computer device may alternatively implement the process through other alternative implementations. For example, the computer device directly performs a vector operation on the first operation vector and the second operation vector to obtain a result vector without adjusting the first operation vector and the second operation vector. For example, in a case that the operation type is addition or subtraction, be directly performing addition or subtraction on the first operation vector and the second operation vector, a result vector can be obtained.

In some embodiments, the element reading process may be performed in parallel with the vector operation process. Accordingly, the $i^{th}$ time and the $(i+1)^{th}$ time are still used as an example for description. In a process of performing a vector operation on a first operation vector and a second operation vector that are read at an $i^{th}$ time, a plurality of elements are read from remaining elements of the first complex number vector to obtain a first operation vector at an $(i+1)^{th}$ time, and a plurality of elements are read from remaining elements of the second complex number vector to obtain a second operation vector at the $(i+1)^{th}$ time.

For example, during vector multiplication, an operation vector for the next operation process is read in advance from the complex number vector. For example, after reading (fetch) elements to obtain an operation vector at the current time, processes of decoding (decode) and operation (execute) start immediately, then during the current vector operation, the CPU reads the next two operation vectors from the two complex number vectors in parallel. In this way, by concurrently performing the operation of the current time and the reading of the next time, the reading time loss of the next operation will be reduced, thereby speeding up the operation, and improving the efficiency. Decoding refers to a process of reading data from an internal memory and dividing the read data into a first operation vector and a second operation vector. That is, after the computer device reads a stream of data from the internal memory, decoding is required to obtain a plurality of elements through division and determine which elements are divided into which operation vector.

In some embodiments, the computer device uses the CPU's instruction-level parallelism (ILP) optimization technology to achieve parallel execution of a plurality of operations. The processor fully utilizes the hardware resources of the computer device by executing a plurality of instructions simultaneously, thereby increasing the execution speed of the program and improving the execution efficiency and performance of the program.

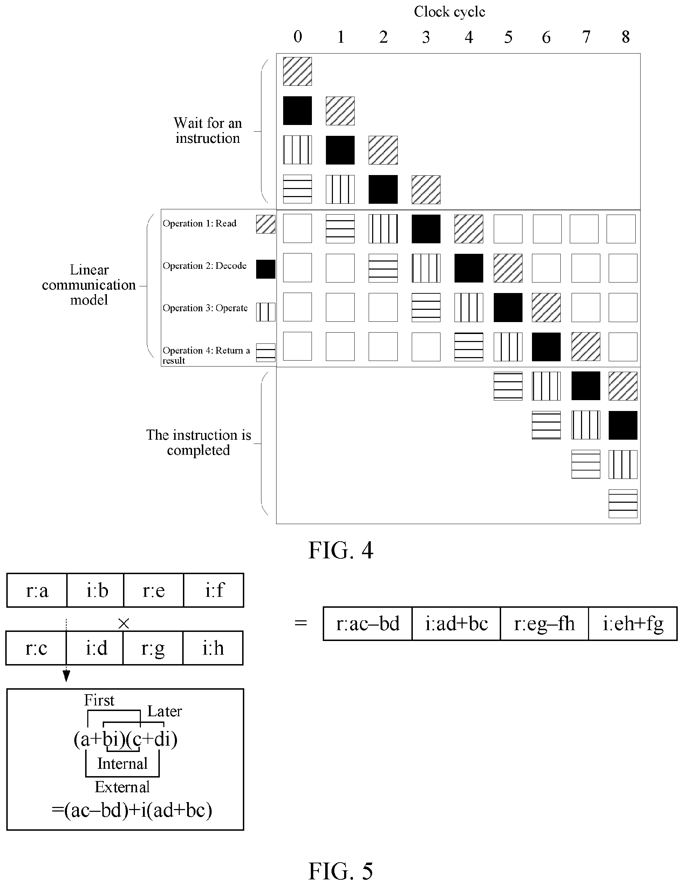

For example, FIG. 4 is a schematic diagram of a parallel operation according to an embodiment of this application. First, wait for an instruction, then execute the instruction for filtering, and finally complete the instruction. A linear communication model (pipeline) divides a filtering process into four operations, which are operations of read, decode, operate, and return a result (write-back) respectively. The blocks with different patterns in the figure represent different operations. In some embodiments, in the process of executing an operation instruction of the current time, a reading instruction of the next time is executed. Further, in the process of executing a decode instruction of the current time, a reading instruction of the next time is executed. Accordingly, within a plurality of clock cycles, a decode operation of the current time and a read operation of the next time are performed in parallel.

**307: The computer device determines a complex number with each two adjacent elements in the plurality of result vectors, to obtain a plurality of complex numbers, the each two adjacent elements being a real part and an imaginary part of the complex number respectively.**

In some embodiments, each time the computer device obtains a respective result vector, the computer device determines a complex number with each two adjacent elements in the result vector in a result complex number array, so as to obtain a plurality of complex numbers in the result complex number array. For example, the computer device fills the each two adjacent elements in the result complex number array respectively as a real part and an imaginary part of the complex number. In some other embodiments, after obtaining at least two result vectors, the computer device fills each two adjacent elements in the at least two result vectors into a complex number in the result complex number array respectively as a real part and an imaginary part thereof, so as to obtain a plurality of complex numbers in the result complex number array.

In some embodiments, two adjacent elements in the result vector are a real part and an imaginary part of a complex number, with the real part in the front and the imaginary part in the rear. That is, the quantity of elements in the result vector is an even number, elements at odd-numbered positions are real parts of complex numbers, and elements at even-numbered positions are imaginary parts of complex numbers.

A plurality of result vectors are filled into the result complex number array in the reading order corresponding to the plurality of result vectors. The plurality of elements in each result vector are filled into the result complex number array in the order thereof in the plurality of elements. The result complex number array is for representing the filtered audio data.

In the related art, because both the audio data and the filter parameter are in the form of a complex number array, during operations based on the complex number arrays, a real part and an imaginary part of each complex number in the complex number arrays are successively read. In this way, reading one complex number from each of the two complex number arrays to perform an operation on the two complex numbers requires four reading operations, and after results are obtained, real parts and imaginary parts in the results are also stored in the result complex number array one by one, that is, the real part or the imaginary part of one complex number is stored in the complex number array at a time, thereby reducing the operation efficiency of the complex number array.

In this embodiment of this application, a multiplication operation of high-frequency complex number arrays in echo cancellation is used as an example for description. The operation process of the complex number arrays involves a multiplication operation and an addition operation of two complex number arrays. The operation process is reading complex numbers of the two complex number arrays participating in the operation one by one, and using real parts and imaginary parts of the complex numbers for participating in the operation. For example, FIG. 5 is a schematic operation diagram of complex number arrays according to an embodiment of this application. Values of real parts and imaginary parts in the two complex number arrays are respectively read in a bitwise manner, then a complex number multiplication operation is performed one by one, and finally the result is stored in the result complex number array. In the process, the reading efficiency is relatively low. Four reading operations are required before the complex number multiplication operation can be performed on the two complex numbers. In addition, four independent multiplication operations need to be performed first, and then two independent addition and subtraction operations are performed. There are a relatively large quantity of operations, and the obtained operation results are stored in the result complex number array at two times, resulting in low overall efficiency. In the figure, r represents a real part of a complex number, and i represents an imaginary part of the complex number.

In this embodiment of this application, an example in which the preset step size is four, the first operation vector and the second operation vector respectively include real parts and imaginary parts of two complex numbers, and the operation type is multiplication is used for description. Therefore, the process in which the computer device performs a vector operation on the read first operation vectors and the read second operation vectors to obtain a plurality of result vectors includes the following operations:

for the first operation vector and the second operation vector that are read each time, replacing, by the computer device, a second-ordered element in the first operation vector with a first-ordered element in the first operation vector, and replacing a fourth-ordered element in the first operation vector with a third-ordered element in the first operation vector, to obtain a third operation vector; and replacing a first-ordered element in the second operation vector with an additive inverse of a second-ordered element in the second operation vector, and replacing a third-ordered element in the second operation vector with an additive inverse of a fourth-ordered element in the second operation vector, to obtain a fourth operation vector; exchanging the first-ordered element in the second operation vector and the second-ordered element in the second operation vector, and exchanging the third-ordered element in the second operation vector and the fourth-ordered element in the second operation vector, to obtain a fifth operation vector; multiplying each two elements in the third operation vector and the second operation vector at corresponding positions to obtain a first intermediate vector; and multiplying each two elements in the fourth operation vector and the fifth operation vector at corresponding positions to obtain a second intermediate vector; and determining a sum of the first intermediate vector and the second intermediate vector, to obtain a respective result vector for each read.

A plurality of elements in the plurality of intermediate result vectors are in a one-to-one correspondence, that is, the plurality of intermediate result vectors have the same quantity of elements.

In this embodiment, a multiplication operation may be performed on two complex numbers simultaneously, and by converting the complex numbers into vectors, concurrent operations can be performed on real parts and imaginary parts of a plurality of complex numbers simultaneously, and the real parts and the imaginary parts are no longer operated independently, that is, concurrent operations on a plurality of real parts and a plurality of imaginary parts are realized. In this way, on the basis of performing concurrent operations on a plurality of complex numbers, the operation efficiency is further improved.

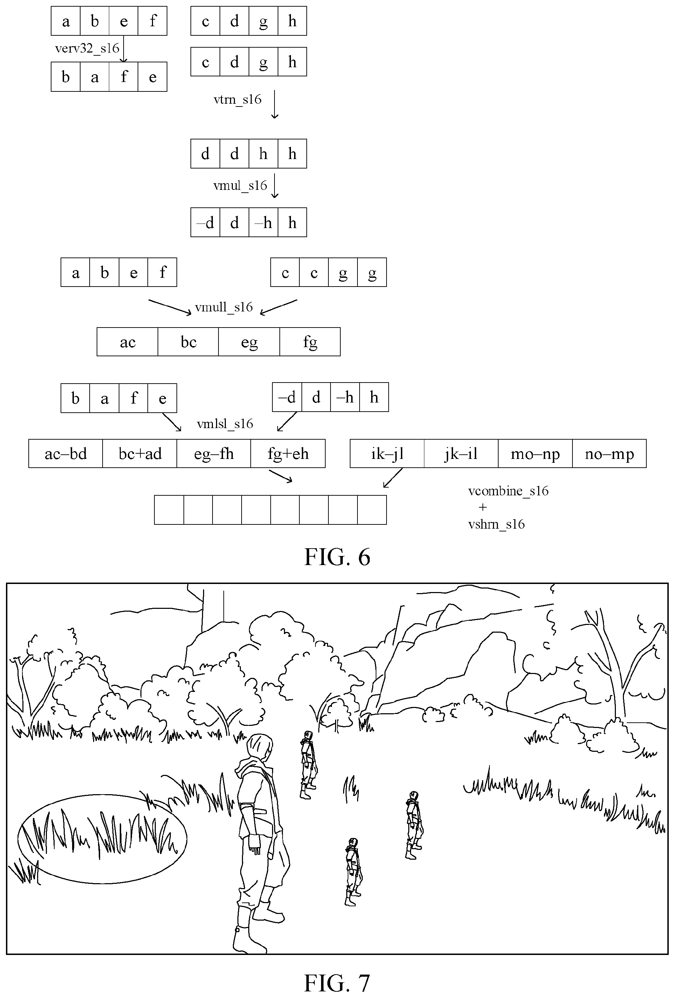

For example, FIG. 6 is a flowchart of a vector operation according to an embodiment of this application. An example in which the preset step size is four, the first operation vector and the second operation vector respectively include real parts and imaginary parts of two complex numbers, and the operation type is multiplication is used for description. The block in the figure represents an element position, and the letter represents a value of an element. verv32_s16 represents an instruction for exchanging elements in vectors in a pairwise manner. vtrn_s16 represents an instruction for modifying values of elements based on values of elements in an operation vector. vmul_s16 represents an instruction for modifying signs of elements in an operation vector. vmull_s16 represents an instruction for multiplying every two elements at corresponding positions in two vectors. vmlsl_s16 represents an instruction for multiplying every two elements at corresponding positions in two vectors and adding the result to an element at a corresponding position in another vector. vcombine_s16+vshrn_s16 is an instruction for filling the result complex number array with elements from a plurality of result vectors. As shown in FIG. 6, the bitwise multiplication of a complex number array is converted into multiplication and multiplication-subtraction of vectors [a, b, e, f] and [c, d, g, h], so that two complex numbers can be read at a time, and a product of the two complex numbers is obtained through one multiplication operation plus one multiplication-subtraction operation. In this way, efficiency of data reading, storage, and operations is significantly improved.

**308: The computer device determines the filtered audio data based on the plurality of complex numbers.**

In this embodiment of this application, the computer device performs an inverse transform on the plurality of complex numbers in the result complex number array to obtain filtered audio data. If the computer device performs a Fourier transform on the audio data to obtain a complex number array, the computer device performs an inverse Fourier transform on the result complex number array to obtain the filtered audio data.

In this embodiment of this application, through the foregoing operations 307 and 308, the process of obtaining filtered audio data based on the plurality of result vectors is implemented. In this embodiment, because the plurality of result vectors are obtained from the plurality of operation vectors, and the plurality of operation vectors are obtained from the two complex number arrays, by converting the plurality of result vectors into a result complex number array, an operation result of the two complex number arrays are obtained. Operations on the two complex number arrays are configured for filtering the audio data, so that the filtered audio data can be obtained based on the result complex number array, thereby ensuring the integrity of the operations.

In this embodiment, by filling the result complex number array with a plurality of elements in each result vector at a time, a plurality of complex numbers can be obtained at a time. Compared with performing an operation on only one set of complex numbers at a time, and thus the result complex number array can be filled with only one complex number at a time, the processing efficiency is improved, thereby improving the filtering efficiency of the audio data.

The foregoing operations 307 and 308 are only an alternative implementation for implementing the process of determining filtered audio data based on the plurality of result vectors. The computer device may alternatively implement the process through other alternative implementations. Details are not described herein again.

In this embodiment of this application, a multiplication operation between complex number arrays is used as an example for description. The filtering process involves not only the multiplication operation between complex number arrays, but also an updating process of the filter parameter. The updating process includes operations such as addition, subtraction, and division. Therefore, the computer device may alternatively convert the corresponding data into complex number arrays, to perform operations based on vectors corresponding to the complex number arrays. For example, referring to the following formula (1), the computer device obtains the filtered audio data through the multiplication operation in the following formula (1).

$$y_{(n)} = w_{(n)} \times x_{(n)} \qquad (1);$$

where $y_{(n)}$ represents an actual output signal of the filter, that is, the filtered audio data, $w_{(n)}$ represents the filter parameter of the filter, and $x_{(n)}$ represents an audio signal inputted into the filter. If the filtered audio data is obtained based on complex number arrays, $y_{(n)}$, $w_{(n)}$, and $x_{(n)}$ in the foregoing formula are all complex number arrays.

In another example, the updating process of the filter parameter is implemented based on formula (1) and the following formula (2) and formula (3). Formula (3) is a formula for updating the filter parameter of the filter by using a least mean square (LMS) algorithm.

$$e_{(n)} = d_{(n)} - y_{(n)} \qquad (2);$$

$$w_{(n+1)} = w_{(n)} + \mu \times e_{(n)} \times x_{(n)} \qquad (3);$$

where $e_{(n)}$ represents an error signal, $d_{(n)}$ represents an expected output signal of the filter, $y_{(n)}$ represents the actual output signal of the filter, and $\mu$ represents a step size parameter, configured for controlling the speed of updating the filter parameter. $w_{(n+1)}$ represents a filter parameter obtained through updating, $w_{(n)}$ represents

the filter parameter of the filter, and $x_{(n)}$ represents the audio signal inputted into the filter. If the filter parameter is updated based on complex number arrays, the factors such as $y_{(n)}$, $w_{(n)}$, $x_{(n)}$, and $e_{(n)}$ in the foregoing formula are all complex number arrays. Further, the computer device converts the complex number arrays in the foregoing formula into vectors for operations, which can improve the operation efficiency, thereby improving the efficiency of updating the filter parameter.

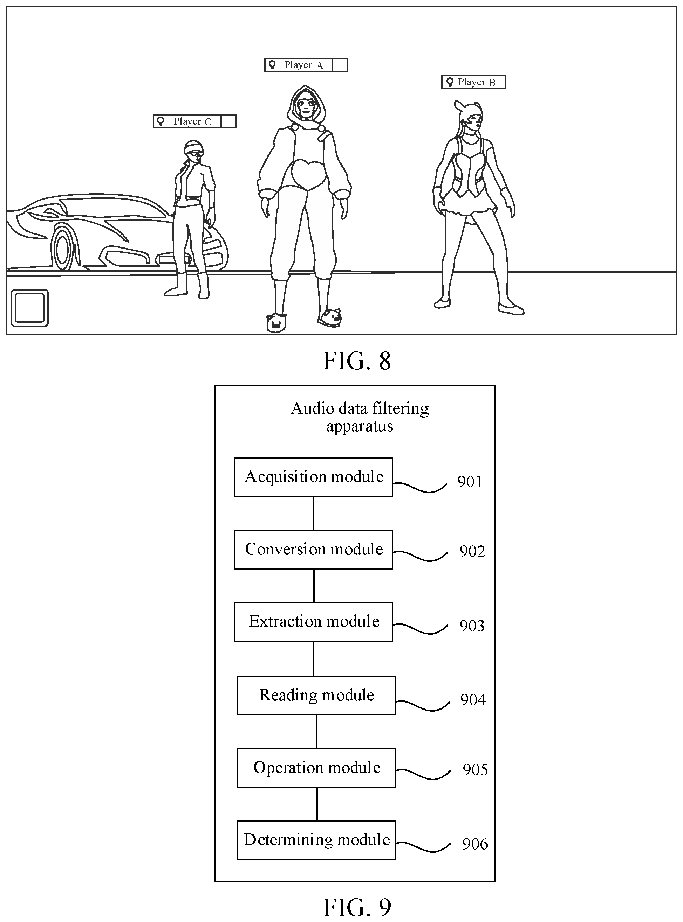

The method provided in the embodiments of this application can be applied to a virtual scene of a game, for example, performing echo cancellation on voices of two players communicating in a game. Further, the method provided in the embodiments of this application is applied in the GVoice SDK (a game voice plug-in), that is, run in the game. Sounds of the players go through GVoice's filtering algorithm, thereby increasing the execution speed of echo cancellation. In addition, on the product side, the SDK's CPU occupation will be reduced. Echo cancellation is the primary operation content of the GVoice SDK, and improving its operation efficiency is crucial to improving the performance of the entire GVoice SDK. By using the method provided in the embodiments of this application to cancel echoes in the audio data, the overall performance of the algorithm is increased by 17%, thereby improving communication quality and clarity. For example, FIG. 7 and FIG. 8 are respectively schematic diagrams of a virtual scene according to an embodiment of this application.

This embodiment of this application provides an audio data filtering method. In the method, audio data is converted into a complex number vector, and filter parameters are represented in the form of a complex number array. In this way, elements are read from the complex number vector for operations, and a real part and an imaginary part of a complex number can be read simultaneously, so that it is unnecessary to read the real part and the imaginary part of the complex number at two times, thereby improving reading efficiency. In addition, a plurality of complex numbers can be read at a time, further improving the reading efficiency. Based on the first operation vector and the second operation vector corresponding to a plurality of complex numbers for vector operations, operations can be performed on the plurality of complex numbers at a time, thereby improving operation efficiency. In the method, by converting a complex number array into a vector for processing, the reading efficiency and the operation efficiency are improved, thereby improving the filtering efficiency of the audio data.

FIG. 9 is a block diagram of an audio data filtering apparatus according to an embodiment of this application. The apparatus is configured to perform the operations in the foregoing audio data filtering method. Referring to FIG. 9, the apparatus includes:

an acquisition module 901, configured to acquire audio data and a first complex number array, the first complex number array indicating filter parameters of a filter;

a conversion module 902, configured to convert the audio data into a second complex number array;

an extraction module 903, configured to extract a real part and an imaginary part of each complex number in the first complex number array to obtain a first complex number vector, and extract a real part and an imaginary part of each complex number in the second complex number array to obtain a second complex number vector, an element of each of the first and second complex number vectors being a real part or an imaginary part of a complex number in a respective one of the first and second complex number arrays;

a reading module 904, configured to successively read elements in the first complex number vector to obtain a plurality of first operation vectors, and successively read elements in the second complex number vector to obtain a plurality of second operation vectors, the first operation vector and the second operation vector each comprising real parts and imaginary parts of a plurality of complex numbers, and a first quantity of complex numbers indicated by the first operation vector being the same as a second quantity of complex numbers indicated by the second operation vector;

an operation module 905, configured to perform a vector operation on the first operation vectors and the second operation vectors to obtain a plurality of result vectors; and

a determining module 906, configured to determine filtered audio data based on the plurality of result vectors.

In some embodiments, the reading module 904 is configured to:

read a plurality of elements in the first complex number vector according to a preset step size each time, to obtain one first operation vector; and

read a plurality of elements in the second complex number vector according to the preset step size each time, to obtain one second operation vector,

the preset step size indicating a quantity of a plurality of elements read each time.

In some embodiments, the operation module 905 is configured to:

for the first operation vector and the second operation vector that are read each time, adjust the first operation vector in a first adjustment manner to obtain a third operation vector, and adjust the second operation vector in a second adjustment manner to obtain a fourth operation vector, the first adjustment manner and the second adjustment manner matching the preset step size and a predetermined operation type between the first complex number array and the second complex number array, where an operation result obtained based on the first to the fourth operation vectors is the same as an operation result obtained based on the predetermined operation type between the first complex number array and the second complex number array; and

perform a vector operation on the first operation vector, the second operation vector, the third operation vector, and the fourth operation vector, to obtain a respective result vector for each read.

In some embodiments, a plurality of elements in the result vector are real parts and imaginary parts of a plurality of complex numbers; and the operation module 905 is configured to:

perform a plurality of vector operations on the first operation vector, the second operation vector, the third operation vector, and the fourth operation vector, to obtain a plurality of intermediate result vectors, each element in the intermediate result vector being configured for determining a real part or an imaginary part of a complex number, and each vector operation corresponding to at least two operation vectors; and

combine the plurality of intermediate result vectors to obtain the result vector, a real part or an imaginary part indicated by the result vector being obtained by combining a plurality of elements at same positions in the plurality of intermediate result vectors.

In some embodiments, the first and second adjustment manners each includes at least one of exchanging elements respectively indicating a real part and an imaginary part in an operation vector, modifying a value of an element in the operation vector, or modifying a sign of the element in the operation vector.

In some embodiments, the first operation vector and the second operation vector respectively include real parts and imaginary parts of two complex numbers; and the operation module 905 is configured to:

for the first operation vector and the second operation vector that are read each time, replace a second-ordered element in the first operation vector with a first-ordered element in the first operation vector, and replace a fourth-ordered element in the first operation vector with a third-ordered element in the first operation vector, to obtain a third operation vector;

and replace a first-ordered element in the second operation vector with an additive inverse of a second-ordered element in the second operation vector, and replace a third-ordered element in the second operation vector with an additive inverse of a fourth-ordered element in the second operation vector, to obtain a fourth operation vector;

exchange the first-ordered element in the second operation vector and the second-ordered element in the second operation vector, and exchange the third-ordered element and the fourth-ordered element in the second operation vector, to obtain a fifth operation vector;

multiply each two elements in the third operation vector and the second operation vector at corresponding positions to obtain a first intermediate vector; and multiply each two elements in the fourth operation vector and the fifth operation vector at corresponding positions to obtain a second intermediate vector; and

determine a sum of the first intermediate vector and the second intermediate vector, to obtain the respective result vector for each read.

In some embodiments, the determining module 906 is further configured to:

determine a plurality of adjustment manner pairs based on a plurality of condition pairs, each condition pair including a preset step size and an operation type, each adjustment manner pair including two adjustment manners, and the two adjustment manners being respectively configured for adjusting two operation vectors; and

the apparatus further includes an establishment module, configured to establish a correspondence based on the plurality of condition pairs and the plurality of adjustment manner pairs, the correspondence including the plurality of condition pairs and the adjustment manner pairs respectively corresponding to the plurality of condition pairs, and the correspondence being configured for determining adjustment manners.

In some embodiments, the reading module 904 is further configured to:
in a process of performing a vector operation on a first operation vector and a second operation vector that are read at an $i^{th}$ time, read a plurality of elements from remaining elements of the first complex number vector to obtain a first operation vector at an $(i+1)^{th}$ time, and read a plurality of elements from remaining elements of the second complex number vector to obtain a second operation vector at the $(i+1)^{th}$ time, i being an integer greater than 0.

In some embodiments, the determining module 906 is configured to:

> determine a complex number with each two adjacent elements in the plurality of result vectors, to obtain a plurality of complex numbers, the each two adjacent elements being a real part and an imaginary part of the complex number respectively; and

> determine the filtered audio data based on the plurality of complex numbers.

This embodiment of this application provides an audio data filtering apparatus. The apparatus converts audio data into a complex number vector, and filter parameters are represented in the form of a complex number array. In this way, elements are read from the complex number vector for operations, and a real part and an imaginary part of a complex number can be read simultaneously, so that it is unnecessary to read the real part and the imaginary part of the complex number at two times, thereby improving reading efficiency. In addition, a plurality of complex numbers can be read at a time, further improving the reading efficiency. Based on the first operation vector and the second operation vector of a plurality of read complex numbers for vector operations, operations can be performed on the plurality of complex numbers at a time, thereby improving operation efficiency. The apparatus converts a complex number array into a vector for processing, which improves the reading efficiency and the operation efficiency, thereby improving the filtering efficiency of the audio data.

In this embodiment of this application, the computer device may be a terminal or a server. When the computer device is a terminal, the terminal is used as the execution subject to implement the technical solutions provided in the embodiments of this application; when the computer device is a server, the server is used as the execution subject to implement the technical solutions provided in the embodiments of this application; or the technical solutions provided in this application are implemented through the interaction between the terminal and the server. This is not limited in the embodiments of this application.

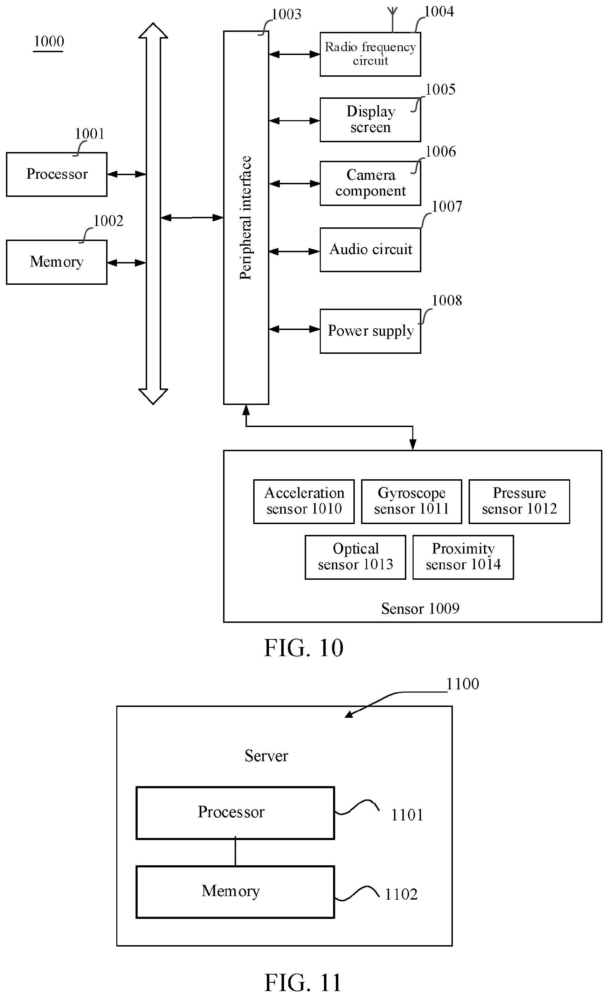

FIG. 10 is a structural block diagram of a terminal 1000 according to an exemplary embodiment of this application. The terminal 1000 may be a portable mobile terminal, for example, a smartphone, a tablet computer, a Moving Picture Experts Group Audio Layer III (MP3) player, a Moving Picture Experts Group Audio Layer IV (MP4) player, a notebook computer, or a desktop computer. The terminal 1000 may also be referred to as user equipment, a portable terminal, a laptop terminal, a desktop terminal, or other names.

Generally, the terminal 1000 includes a processor 1001 and a memory 1002.

The processor 1001 may include one or more processing cores, for example, the processor 1001 may be a 4-core processor or an 8-core processor. The processor 1001 may be implemented by using at least one hardware form of digital signal processing (DSP), a field-programmable gate array (FPGA), and a programmable logic array (PLA). In some embodiments, the processor 1001 may further include an artificial intelligence (AI) processor. The AI processor is configured to process a computing operation related to machine learning.

The memory 1002 may include one or more computer-readable storage media. The computer-readable storage media may be non-transient. The memory 1002 may further include a high-speed random access memory (RAM), and a non-volatile memory such as one or more magnetic disk storage devices and a flash storage device. In some embodiments, a non-transient computer-readable storage medium in the memory 1002 is configured to store at least one piece of program code, and the at least one piece of program code is configured to be executed by the processor 1001 to implement the audio data filtering method provided in the method embodiments of this application.

In some embodiments, the terminal 1000 may alternatively include a peripheral interface 1003 and at least one peripheral. The processor 1001, the memory 1002, and the peripheral interface 1003 may be connected to each other by a bus or a signal cable. Each peripheral may be connected to the peripheral interface 1003 by a bus, a signal cable, or a circuit board. Specifically, the peripheral includes: at least one of a radio frequency (RF) circuit 1004, a display screen 1005, a camera component 1006, an audio circuit 1007, and a power supply 1008.

In some embodiments, the terminal 1000 further includes one or more sensors 1009. The one or more sensors 1009 include, but not limited to, an acceleration sensor 1010, a gyroscope sensor 1011, a pressure sensor 1012, an optical sensor 1013, and a proximity sensor 1014.

A person skilled in the art may understand that the structure shown in FIG. 10 does not constitute a limitation to the terminal 1000, and the terminal may include more or fewer components than those shown in the figure, or some components may be combined, or a different component deployment may be used.

FIG. 11 is a block diagram of a server according to an embodiment of this application. The server 1100 may vary greatly due to different configurations or performance, and may include one or more central processing units (CPUs) 1101 and one or more memories 1102. The memory 1102 is configured to store executable program code, and the processor 1101 is configured to execute the executable program code, to implement the audio data filtering method provided in the foregoing method embodiments. Certainly, the server may further have a wired or wireless network interface, a keyboard, an I/O interface and other components to facilitate I/O. The server may further include other components for implementing device functions. Details are not described herein again.

An embodiment of this application further provides a computer-readable storage medium, the computer-readable storage medium storing at least one program, the at least one program being loaded and executed by a processor to implement the audio data filtering method in any one of the foregoing implementations.

An embodiment of this application further provides a computer program product, the computer program product including at least one program, the at least one program being stored in a computer-readable storage medium, a processor of a computer device reading the at least one program from the computer-readable storage medium, and the processor executing the at least one program to cause the computer device to perform the audio data filtering method in any one of the foregoing implementations.

In some embodiments, the computer program product involved in the embodiments of this application may be deployed to be executed on a computer device, or deployed to be executed on a plurality of computer devices at the same location, or deployed to be executed on a plurality of computer devices that are distributed in a plurality of locations and interconnected by using a communication network, where the plurality of computer devices that are distributed in the plurality of locations and interconnected by using the communication network can form a blockchain system.

The foregoing descriptions are merely alternative embodiments of this application, but are not intended to limit this application. Any modification, equivalent replacement, or improvement made within the spirit and principle of this application shall fall within the protection scope of this application.

**Claims**

1. An audio data filtering method, applicable to a computer device, the method comprising:

   acquiring audio data and a first complex number array, the first complex number array indicating filter parameters of a filter;
   converting the audio data into a second complex number array;
   extracting a real part and an imaginary part of each complex number in the first complex number array to obtain a first complex number vector, and extracting a real part and an imaginary part of each complex number in the second complex number array to obtain a second complex number vector;
   successively reading elements in the first complex number vector to obtain a plurality of first operation vectors, and successively reading elements in the second complex number vector to obtain a plurality of second operation vectors, the first operation vector and the second operation vector each comprising real parts and imaginary parts of a plurality of complex numbers, and a first quantity of complex numbers indicated by the first operation vector being the same as a second quantity of complex numbers indicated by the second operation vector;
   performing a vector operation on the first operation vectors and the second operation vectors to obtain a plurality of result vectors; and
   determining filtered audio data based on the plurality of result vectors.

2. The method according to claim 1, wherein the successively reading elements in the first complex number vector to obtain a plurality of first operation vectors, and successively reading elements in the second complex number vector to obtain a plurality of second operation vectors comprises:

   reading a plurality of elements in the first complex number vector according to a preset step size each time, to obtain one first operation vector; and
   reading a plurality of elements in the second complex number vector according to the preset step size each time, to obtain one second operation vector,
   the preset step size indicating a quantity of a plurality of elements read each time.

3. The method according to claim 1, wherein the performing a vector operation on the first operation vectors and the second operation vectors to obtain a plurality of result vectors comprises:

   for the first operation vector and the second operation vector that are read each time, adjusting the first operation vector in a first adjustment manner to obtain a third operation vector, and adjusting the second operation vector in a second adjustment manner to obtain a fourth operation vector, the first adjustment manner and the second adjustment manner matching the preset step size and a predetermined operation type between the first complex number array and the second complex number array, wherein an operation result obtained based on the first to the fourth operation vectors is the same as an operation result obtained based on the predetermined operation type between the first complex number array and the second complex number array; and
   performing a vector operation on the first operation vector, the second operation vector, the third operation vector, and the fourth operation vector, to obtain a respective result vector for each read.

4. The method according to claim 3, wherein a plurality of elements in the result vector are real parts and imaginary parts of a plurality of complex numbers, and the performing a vector operation on the first operation vector, the second operation vector, the third operation vector, and the fourth operation vector, to obtain a respective result vector corresponding to each read, comprises:

performing a plurality of vector operations on the first operation vector, the second operation vector, the third operation vector, and the fourth operation vector, to obtain a plurality of intermediate result vectors, each element in the intermediate result vector being configured for determining a real part or an imaginary part of a complex number, and each vector operation corresponding to at least two operation vectors; and

combining the plurality of intermediate result vectors to obtain the result vector, a real part or an imaginary part indicated by the result vector being obtained by combining a plurality of elements at same positions in the plurality of intermediate result vectors.

5. The method according to claim 3, wherein the first and second adjustment manners each comprises at least one of exchanging elements respectively indicating a real part and an imaginary part in an operation vector, modifying a value of an element in the operation vector, or modifying a sign of the element in the operation vector.

6. The method according to any one of claims 1 to 3, wherein the first operation vector and the second operation vector each comprise real parts and imaginary parts of two complex numbers; and the performing a vector operation on the first operation vectors and the second operation vectors to obtain a plurality of result vectors comprises:

for the first operation vector and the second operation vector that are read each time, replacing a second-ordered element in the first operation vector with a first-ordered element in the first operation vector, and replacing a fourth-ordered element in the first operation vector with a third-ordered element in the first operation vector, to obtain a third operation vector;

replacing a first-ordered element in the second operation vector with an additive inverse of a second-ordered element in the second operation vector, and replacing a third-ordered element in the second operation vector with an additive inverse of a fourth-ordered element in the second operation vector, to obtain a fourth operation vector;

exchanging the first-ordered element in the second operation vector and the second-ordered element in the second operation vector, and exchanging the third-ordered element in the second operation vector and the fourth-ordered element in the second operation vector, to obtain a fifth operation vector;

multiplying each two elements in the third operation vector and the second operation vector at corresponding positions to obtain a first intermediate vector; and multiplying each two elements in the fourth operation vector and the fifth operation vector at corresponding positions to obtain a second intermediate vector; and

determining a sum of the first intermediate vector and the second intermediate vector, to obtain the respective result vector for each read.

7. The method according to claim 3, further comprising:

determining a plurality of adjustment manner pairs based on a plurality of condition pairs, each condition pair comprising a preset step size and an operation type, each adjustment manner pair comprising two adjustment manners, and the two adjustment manners being respectively configured for adjusting two operation vectors; and

establishing a correspondence based on the plurality of condition pairs and the plurality of adjustment manner pairs, the correspondence comprising the plurality of condition pairs and the adjustment manner pairs respectively corresponding to the plurality of condition pairs, and the correspondence being configured for determining adjustment manners.

8. The method according to claim 1, further comprising: in a process of performing a vector operation on a first operation vector and a second operation vector that are read at an $i^{th}$ time, reading a plurality of elements from remaining elements of the first complex number vector to obtain a first operation vector at an $(i+1)^{th}$ time, and reading a plurality of elements from remaining elements of the second complex number vector to obtain a second operation vector at the $(i+1)^{th}$ time, i being an integer greater than 0.

9. The method according to claim 1, wherein the determining filtered audio data based on the plurality of result vectors comprises:

determining a complex number with each two adjacent elements in the plurality of result vectors, to obtain a plurality of complex numbers, the each two adjacent elements being a real part and an imaginary part of the complex number respectively; and
determining the filtered audio data based on the plurality of complex numbers.

10. An audio data filtering apparatus, comprising:

an acquisition module, configured to acquire audio data and a first complex number array, the first complex number array indicating filter parameters of a filter;
a conversion module, configured to convert the audio data into a second complex number array;
an extraction module, configured to extract a real part and an imaginary part of each complex number in the first complex number array to obtain a first complex number vector, and extract a real part and an imaginary part of each complex number in the second complex number array to obtain a second complex number vector;
a reading module, configured to successively read elements in the first complex number vector to obtain a plurality of first operation vectors, and successively read elements in the second complex number vector to obtain a plurality of second operation vectors, the first operation vector and the second operation vector each comprising real parts and imaginary parts of a plurality of complex numbers, and a first quantity of complex numbers indicated by the first operation vector being the same as a second quantity of complex numbers indicated by the second operation vector;
an operation module, configured to perform a vector operation on the first operation vectors and the second operation vectors to obtain a plurality of result vectors; and
a determining module, configured to determine filtered audio data based on the plurality of result vectors.

11. A computer device, comprising a processor and a memory, the memory being configured to store at least one program, the at least one program being loaded by the processor to perform the audio data filtering method according to any one of claims 1 to 9.

12. A computer-readable storage medium, configured to store at least one program, the at least one program being configured to perform the audio data filtering method according to any one of claims 1 to 9.

13. A computer program product, comprising at least one program, the at least one program being stored in a computer-readable storage medium, a processor of a computer device reading the at least one program from the computer-readable storage medium, and the processor executing the at least one program to cause the computer device to perform the audio data filtering method according to any one of claims 1 to 9.

FIG. 1

| 201 |
| --- |
| A computer device acquires audio data and a first complex number array, the first complex number array indicating filter parameters of a filter |

| 202 |
| --- |
| The computer device converts the audio data into a second complex number array |

| 203 |
| --- |
| The computer device extracts a real part and an imaginary part of each complex number in the first complex number array to obtain a first complex number vector, and extracts a real part and an imaginary part of each complex number in the second complex number array to obtain a second complex number vector, an element of each of the first and second complex number vectors being a real part or an imaginary part of a complex number in a respective one of the first and second complex number arrays |

| 204 |
| --- |
| The computer device successively reads elements in the first complex number vector to obtain a plurality of first operation vectors, and successively reads elements in the second complex number vector to obtain a plurality of second operation vectors, the first operation vector and the second operation vector each including real parts and imaginary parts of a plurality of complex numbers, and a first quantity of complex numbers indicated by the first operation vector being the same as a second quantity of complex numbers indicated by the second operation vector |

| 205 |
| --- |
| The computer device performs a vector operation on the first operation vectors and the second operation vectors to obtain a plurality of result vectors |

| 206 |
| --- |
| The computer device determines filtered audio data based on the plurality of result vectors |

FIG. 2

301

A computer device acquires audio data and a first complex number array, the first complex number array indicating filter parameters of a filter

302

The computer device converts the audio data into a second complex number array

303

The computer device extracts a real part and an imaginary part of each complex number in the first complex number array to obtain a first complex number vector, and extracts a real part and an imaginary part of each complex number in the second complex number array to obtain a second complex number vector, an element of each of the first and second complex number vectors being a real part or an imaginary part of a complex number in a respective one of the first and second complex number arrays

304

The computer device successively reads elements in the first complex number vector to obtain a plurality of first operation vectors, and successively reads elements in the second complex number vector to obtain a plurality of second operation vectors, the first operation vector and the second operation vector each including real parts and imaginary parts of a plurality of complex numbers, and a first quantity of complex numbers indicated by the first operation vector being the same as a second quantity of complex numbers indicated by the second operation vector

305

For the first operation vector and the second operation vector that are read each time, the computer device adjusts the first operation vector in a first adjustment manner to obtain a third operation vector, and adjusts the second operation vector in a second adjustment manner to obtain a fourth operation vector, the first adjustment manner and the second adjustment manner matching the preset step size and a predetermined operation type between the first complex number array and the second complex number array, where an operation result obtained based on the first to the fourth operation vectors is the same as an operation result obtained based on the predetermined operation type between the first complex number array and the second complex number array

306

The computer device performs a vector operation on the first operation vector, the second operation vector, the third operation vector, and the fourth operation vector, to obtain a respective result vector for each read

307

The computer device determines a complex number with each two adjacent elements in the plurality of result vectors, to obtain a plurality of complex numbers, the each two adjacent elements being a real part and an imaginary part of the complex number respectively

308

The computer device determines the filtered audio data based on the plurality of complex numbers

FIG. 3

Clock cycle

| | 0 | 1 | 2 | 3 | 4 | 5 | 6 | 7 | 8 |

Wait for an instruction

Linear communication model

Operation 1: Read

Operation 2: Decode

Operation 3: Operate

Operation 4: Return a result

The instruction is completed

FIG. 4

| r:a | i:b | r:e | i:f |

× 

| r:c | i:d | r:g | i:h |

First
Later
(a+bi)(c+di)
Internal
External
=(ac−bd)+i(ad+bc)

= 

| r:ac−bd | i:ad+bc | r:eg−fh | i:eh+fg |

FIG. 5

| a | b | e | f |
|---|---|---|---|

verv32_s16 ↓

| b | a | f | e |
|---|---|---|---|

| c | d | g | h |
|---|---|---|---|

| c | d | g | h |
|---|---|---|---|

vtrn_s16 ↓

| d | d | h | h |
|---|---|---|---|

vmul_s16 ↓

| –d | d | –h | h |
|---|---|---|---|

| a | b | e | f |
|---|---|---|---|

| c | c | g | g |
|---|---|---|---|

vmull_s16

| ac | bc | eg | fg |
|----|----|----|----|

| b | a | f | e |
|---|---|---|---|

| –d | d | –h | h |
|---|---|---|---|

vmlsl_s16

| ac–bd | bc+ad | eg–fh | fg+eh |
|-------|-------|-------|-------|

| ik–jl | jk–il | mo–np | no–mp |
|-------|-------|-------|-------|

| | | | | | | | |
|--|--|--|--|--|--|--|--|

vcombine_s16
+
vshrn_s16

## FIG. 6

## FIG. 7

FIG. 8

FIG. 9

1000

Processor 1001

Memory 1002

Peripheral interface 1003

Radio frequency circuit 1004

Display screen 1005

Camera component 1006

Audio circuit 1007

Power supply 1008

| Acceleration sensor 1010 | Gyroscope sensor 1011 | Pressure sensor 1012 |
|---|---|---|
| | Optical sensor 1013 | Proximity sensor 1014 |

Sensor 1009

FIG. 10

1100

Server

Processor 1101

Memory 1102

FIG. 11

## INTERNATIONAL SEARCH REPORT

| International application No. |
|---|
| **PCT/CN2024/095414** |

**A. CLASSIFICATION OF SUBJECT MATTER**

G10L 21/0208(2013.01)i; G10K 11/178(2006.01)i

According to International Patent Classification (IPC) or to both national classification and IPC

**B. FIELDS SEARCHED**

Minimum documentation searched (classification system followed by classification symbols)

IPC:G10L G10K

Documentation searched other than minimum documentation to the extent that such documents are included in the fields searched

Electronic data base consulted during the international search (name of data base and, where practicable, search terms used)

CNABS; CNTXT; CNKI; VEN; USTXT; WOTXT; EPTXT; IEEE: 复数, 滤波, 声音, 实部, 向量, 虚部, 音频, 语音, 运算, audio, sound, voice, complex number, filter, vector, real part, imaginary part

**C. DOCUMENTS CONSIDERED TO BE RELEVANT**

| Category* | Citation of document, with indication, where appropriate, of the relevant passages | Relevant to claim No. |
|---|---|---|
| PX | CN 116935824 A (TENCENT TECHNOLOGY (SHENZHEN) CO., LTD.) 24 October 2023 (2023-10-24) description, paragraphs [0005]-[0140] | 1-13 |
| A | CN 114333811 A (CHINA MOBILE COMMUNICATION LTD., RESEARCH INSTITUTE et al.) 12 April 2022 (2022-04-12) description, paragraphs [0020]-[0154] | 1-13 |
| A | CN 110876100 A (BEIJING JIA'NAN JIESI INFORMATION TECHNOLOGY CO., LTD.) 10 March 2020 (2020-03-10) entire document | 1-13 |
| A | US 2019156819 A1 (GOOGLE LLC.) 23 May 2019 (2019-05-23) entire document | 1-13 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **25 July 2024** | **05 August 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/095414**

| Patent document cited in search report | | | Publication date (day/month/year) | Patent family member(s) | | | Publication date (day/month/year) |
|---|---|---|---|---|---|---|---|
| CN | 116935824 | A | 24 October 2023 | None | | | |
| CN | 114333811 | A | 12 April 2022 | None | | | |
| CN | 110876100 | A | 10 March 2020 | None | | | |
| US | 2019156819 | A1 | 23 May 2019 | US | 10529320 | B2 | 07 January 2020 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311201744